(19) Europäisches Patentamt European Patent Office Office européen des brevets

(11) **EP 4 708 380 A1**

(12) **EUROPEAN PATENT APPLICATION**

(43) Date of publication:
**11.03.2026  Bulletin 2026/11**

(21) Application number: **25198385.4**

(22) Date of filing: **27.08.2025**

(51) International Patent Classification (IPC):
*H01M 4/133* (2010.01)    *H01M 4/36* (2006.01)
*H01M 4/587* (2010.01)    *H01M 10/0525* (2010.01)
*H01M 4/02* (2006.01)

(52) Cooperative Patent Classification (CPC):
**H01M 4/362; H01M 4/133; H01M 4/587;**
**H01M 10/0525;** H01M 2004/021; H01M 2004/027

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority:  **28.08.2024  KR 20240116103**
                **23.06.2025  KR 20250082653**

(71) Applicant: **SAMSUNG SDI CO., LTD.**
**Yongin-si, Gyeonggi-do 17084 (KR)**

(72) Inventors:
- **CHOI, Il Young**
  **16678 Gyeonggi-do (KR)**
- **MOON, Joong Ho**
  **16678 Gyeonggi-do (KR)**

(74) Representative: **Meissner Bolte Partnerschaft**
**mbB**
**Patentanwälte Rechtsanwälte**
**Postfach 86 06 24**
**81633 München (DE)**

(54) **NEGATIVE ELECTRODE ACTIVE MATERIAL FOR RECHARGEABLE LITHIUM BATTERY AND RECHARGEABLE LITHIUM BATTERY INCLUDING THE SAME**

(57)    The present invention relates to a negative electrode active material for a rechargeable lithium battery and a rechargeable lithium battery including the same, and the negative electrode active material for a rechargeable lithium battery includes graphite including secondary particles in which primary particles are assembled; and amorphous carbon present inside the secondary particles, wherein a ratio of the average particle diameter D50 of the amorphous carbon to the average particle diameter D50 of the primary particles is 0.1 to 0.5.

**EP 4 708 380 A1**

**Description**

**BACKGROUND**

**1. Field**

The present invention relates to a negative electrode active material for a rechargeable lithium battery and a rechargeable lithium battery including the same.

**2. Discussion of Related Art**

In response to the recent rapid spread of electronic devices that use batteries, such as mobile phones, laptop computers, electric vehicles, and the like, the demand for rechargeable batteries with high energy density and high capacity is rapidly increasing. Accordingly, research and development to improve the performance of rechargeable lithium batteries is actively ongoing.

The rechargeable lithium battery is a battery including a positive electrode and a negative electrode, which include active materials capable of intercalating and deintercalating lithium ions, and an electrolyte, and generates electrical energy by oxidation and reduction reactions when lithium ions are intercalated/deintercalated into/from the positive electrode and the negative electrode.

**SUMMARY**

The present invention is directed to providing a negative electrode active material for a rechargeable lithium battery, which provides a boost charging effect, high bonding strength of an electrode plate, and an effect of suppressing side reactions caused by hard carbon.

The present invention is also directed to providing a negative electrode active material for a rechargeable lithium battery, which improves processability in manufacturing a negative electrode by providing a slurry having appropriate viscosity.

The present invention is also directed to providing a rechargeable lithium battery including the above-described negative electrode active material.

According to an aspect of the present invention, a negative electrode active material for a rechargeable lithium battery includes graphite including secondary particles in which primary particles are assembled; and amorphous carbon present inside the secondary particles, wherein a ratio of the average particle diameter D50 of the amorphous carbon to the average particle diameter D50 of the primary particles is 0.1 to 0.5.

According to another aspect of the present invention, a negative electrode for a rechargeable lithium battery includes the above-described negative electrode active material for a rechargeable lithium battery.

According to another aspect of the present invention, a rechargeable lithium battery includes a negative electrode including the above-described negative electrode active material for a rechargeable lithium battery; and a positive electrode.

**BRIEF DESCRIPTION OF THE DRAWINGS**

The above and other aspects, objects, features, and advantages of the present invention will become more apparent to those of ordinary skill in the art by describing some embodiments thereof in further detail with reference to the accompanying drawings, in which:

FIG. 1 shows a schematic diagram of a negative electrode active material for a rechargeable lithium battery according to an embodiment;
FIG. 2 shows a schematic diagram of a negative electrode active material for a rechargeable lithium battery according to another embodiment;
FIG. 3 shows a schematic diagram of a negative electrode active material for a rechargeable lithium battery according to a comparative example; and
FIGS. 4 to 7 show schematic cross-sectional views of a rechargeable lithium battery according to some embodiments.

**DETAILED DESCRIPTION**

Herein, some embodiments of the present invention will be described in further detail. However, these embodiments are provided by way of example, and the present invention is not limited thereto and is defined by the scope of the claims.

Unless specifically stated otherwise in this specification, when a portion of a layer, film, region, plate or the like is referred to as being "on" another portion, this includes not only a case in which the portion is "directly on" another portion but also a case in which there is another portion interposed therebetween.

Unless specifically stated otherwise in this specification, singular expressions may include plural expressions. Also, unless specifically stated otherwise, "A or B" may refer to "including A, including B, or including A and B."

In this specification, a "combination thereof" may refer to a mixture, laminate, composite, copolymer, alloy, blend, and reaction product of constituents.

Unless otherwise defined in this specification, a size may be an average size. Also, a size refers to an average particle size (D50) corresponding to a cumulative volume of 50 vol% in the particle size distribution. An average size (D50) may be measured by a method widely known in the art, for example, using a particle size analyzer, a transmission electron micrograph, or a scanning electron micrograph. As another method, an average size (D50) may be obtained by performing measurement with a measuring instrument using a dynamic light scattering method, analyzing data to count the number of particles for each particle size range, and calculating an average particle diameter from the result. Alternatively, measurement may be performed using a laser diffraction method. More specifically, when measurement is performed using a laser diffraction method, after particles to be measured are dispersed in a dispersion medium and then irradiated with ultrasound having a frequency of about 28 kHz at an output of 60 W using a commercially available laser diffraction particle diameter measuring instrument (e.g., MT 3000 commercially available from Microtrac), an average size (D50) corresponding to 50% in the particle diameter distribution in the measuring instrument may be calculated.

When particles have a spherical shape, the size may refer to a particle diameter.

A negative electrode active material for a rechargeable lithium battery according to an embodiment can provide a boost charging effect, high bonding strength of an electrode plate, and an effect of suppressing side reactions that occur when amorphous carbon is exposed.

A negative electrode active material for a rechargeable lithium battery according to an embodiment can increase processability in manufacturing a negative electrode by ensuring that a slurry has appropriate viscosity.

A negative electrode active material for a rechargeable lithium battery according to an embodiment includes graphite including secondary particles in which primary particles are assembled; and amorphous carbon present inside the secondary particles, wherein a ratio of the average particle diameter D50 of the amorphous carbon to the average particle diameter D50 of the primary particles is 0.1 to 0.5.

The negative electrode active material includes amorphous carbon present inside the secondary particles. The amorphous carbon present inside may provide a boost charging effect by serving as a bridge for lithium ions. Also, the amorphous carbon is present inside the secondary particles, and side reactions of amorphous carbon may be suppressed compared to a case in which amorphous carbon is present on a surface of secondary particles and exposed to the outside. The side reactions of amorphous carbon may decrease electrical capacity.

In one or more embodiments, the amorphous carbon may be present on the surface of the primary particles.

In one or more embodiments, the amorphous carbon may be present on the surface of the primary particles and in a space made by assembling the primary particles.

In one or more embodiments, the amorphous carbon may be present in the form of independent particles dispersed separately from each other inside the secondary particles.

In one or more embodiments, the amorphous carbon may not be present on an outer surface of the secondary particles.

In one or more embodiments, a ratio of the average particle diameter D50 of the amorphous carbon to the average particle diameter D50 of the primary particles is 0.1 to 0.5. If the ratio is less than 0.1, the average particle diameter D50 of amorphous carbon is excessively small, and, thus, a boost charging effect may be insufficient. If the ratio exceeds 0.5, the average size D50 of amorphous carbon is excessively large, and, thus, there may be problems such as a decrease in battery efficiency, a low lifetime retention rate, a high expansion rate, and a decrease in bonding strength of an electrode plate. For example, the ratio may be 0.1, 0.11, 0.12, 0.13, 0.14, 0.15, 0.16, 0.17, 0.18, 0.19, 0.2, 0.21, 0.22, 0.23, 0.24, 0.25, 0.26, 0.27, 0.28, 0.29, 0.3, 0.31, 0.32, 0.33, 0.34, 0.35, 0.36, 0.37, 0.38, 0.39, 0.4, 0.41, 0.42, 0.43, 0.44, 0.45, 0.46, 0.47, 0.48, 0.49, 0.5.

In one or more embodiments, the primary particles may have an average size D50 of 7 $\mu$m to 10 $\mu$m, for example 7, 8, 9, 10 $\mu$m. In this range, the above ratio can be easily reached, the primary particles can be easily assembled to form secondary particles, and amorphous carbon can be easily present inside secondary particles.

In one or more embodiments, the secondary particles may have an average size D50 of 8 $\mu$m to 30 $\mu$m, which is larger than the average size D50 of the primary particles. In this range, the above ratio can be easily reached. In one or more embodiments, for example, the secondary particles may have an average size D50 of 8, 9, 10, 11, 12, 13, 14, 15, 16, 17, 18, 19, 20, 21, 22, 23, 24, 25, 26, 27, 28, 29, 30 $\mu$m, 5 $\mu$m to 20 $\mu$m or 8 $\mu$m to 15 $\mu$m.

In one or more embodiments, the primary particles may have a plate shape and a major axis length of 2 to 200 $\mu$m, for example, 5, 15, 20, 25, 30, 35, 40, 45, 50, 55, 60, 65, 70, 75, 80, 85, 90, 95, 100, 105, 110, 115, 120, 125, 130, 135, 140, 145, 150, 155, 160, 165, 170, 180, 185, 190, 195, 200 $\mu$m, 2 to 100 $\mu$m, 10 to 50 $\mu$m, 5 to 30 $\mu$m, or 20 to 30 $\mu$m. In this range, the above ratio can be easily reached, the primary particles can be easily assembled to form secondary particles, and amorphous carbon can be easily present inside secondary particles.

Here, the "major axis length" refers to the length of the longest axis between opposing sides when the primary particles have a plate shape.

In one or more embodiments, the secondary particles may have a spherical shape.

In one or more embodiments, the average size D50 of the secondary particles is smaller than the major axis length of the primary particles and may be 5 to 30 $\mu$m. In this range, the above ratio can be easily reached. In one or more embodiments, for example, the average size D50 of the secondary particles may be 5, 6, 7, 8, 9, 10, 11, 12, 13, 14, 15, 16, 17, 18, 19, 20, 21, 22, 23, 24, 25, 26, 27, 28, 29, 30 $\mu$m, 5 to 20 $\mu$m or 5 to 15 $\mu$m.

In one or more embodiments, the amorphous carbon may have an average particle diameter D50 of 1 $\mu$m to 5 $\mu$m, for example 1, 2, 3, 4, 5 $\mu$m. In this range, the above ratio can be easily reached, and the amorphous carbon can be stably present inside secondary particles.

In one or more embodiments, a ratio of the average size D50 of the secondary particles to the average size D50 of the primary particles may be more than 1 and 3 or less, for example, 1.5 to 3, 1.5, 1.6, 1.7, 1.8, 1.9, 2.0, 2.1, 2.2, 2.3, 2.4, 2.5, 2.6, 2.7, 2.8, 2.9, 3. By providing an appropriate amount of hard carbon to be present inside secondary particles in the above range, a boost charging effect and a side reaction suppression effect can be easily provided.

In one or more embodiments, the amorphous carbon may be included in an amount of 1 to 10 wt% in the negative electrode active material. In this range, a boost charging effect, a side reaction suppression effect, and an effect of improving the bonding strength of an electrode plate to a current collector can be provided. In one or more embodiments, for example, the amorphous carbon may be included in an amount of 1, 2, 3, 4, 5, 6, 7, 8, 9, 10 wt%, 1 to 5 wt% or 3 to 5 wt% in the negative electrode active material, and, in this range, a boost charging effect, a side reaction suppression effect, and an effect of improving the bonding strength of an electrode plate to a current collector can be provided.

In one or more embodiments, the graphite may include one or more of artificial graphite and natural graphite.

In one or more embodiments, the artificial graphite may have a shape such as a powder, flake, block, rod, or plate, without limitation.

In one or more embodiments, the natural graphite may be spheroidized natural graphite, without limitation.

In one or more embodiments, the amorphous carbon may be a mixture of one or more selected form soft carbon, hard carbon, mesophase pitch carbide, and calcined coke. For example, the amorphous carbon may be hard carbon. The hard carbon may implement the effects of the negative electrode active material.

In one or more embodiments, in the negative electrode active material, the graphite and the amorphous carbon may be included in a weight ratio of 99:1 to 90:10, for example, 90:1 to 93:7, 97:3 to 93:7, or 97:3 to 95:5 based on 100 parts by weight of a sum of the graphite and the amorphous carbon. In this range, side reactions with an electrolyte can be effectively suppressed, and charge/discharge rate characteristics can be improved.

Herein, a method of preparing the negative electrode active material according to an embodiment will be described.

(1) Coke (isotropic coke, needle coke, etc.), which is an artificial graphite raw material, is pulverized to obtain primary particles having an average particle diameter (D50) of 7 to 10 $\mu$m. In an embodiment, the artificial graphite raw material may be pulverized by an airflow pulverization method. The airflow pulverization may include pulverizing the artificial graphite raw material under conditions of room temperature and 5 to 20 kg/cm$^2$.

(2) The primary particles are assembled to form secondary particles using a spheronizer.

In the assembly process, amorphous hard carbon with a certain (e.g., predetermined) size is added and mixed. In an embodiment, the amorphous hard carbon has a size of 1 $\mu$m to 5 $\mu$m.

The amorphous hard carbon may include a carbide of a precursor of the amorphous hard carbon.

A precursor of the amorphous carbon is not particularly limited as long as it is a material that becomes a carbide. For example, the precursor may include one or more selected from phenol resin, furan resin, epoxy resin, polyacrylonitrile resin, polyamide resin, polyimide resin, polyamideimide resin, synthetic pitch, petroleumbased pitch, coal-based pitch, and tar.

In the mixing, amorphous hard carbon may be added such that artificial graphite and amorphous carbon are present in the above-described weight ratio in a final product, that is, a negative electrode active material.

(3) The mixture obtained by the mixing is thermally treated by firing, thereby obtaining a negative electrode active material according to an embodiment.

The thermal treatment may be performed at 2500 °C or higher, for example, 2500 °C to 3500 °C, or 2500 °C to 3000 °C. In the above range, hard carbon can be easily present inside secondary particles in the negative electrode active material.

The thermal treatment may be maintained for 1 to 5 hours, for example, 1 to 4 hours, 1 to 3 hours, or 2 to 3 hours.

Herein, a method of preparing the negative electrode active material according to another embodiment will be described.

(1) A natural graphite raw material having a size of 80 μm or more is pulverized to obtain plate-shaped primary particles having a major axis length of 5 to 200 μm. In an embodiment, the natural graphite raw material may be pulverized by an airflow pulverization method. The airflow pulverization may include pulverizing the natural graphite raw material under conditions of room temperature and 5 to 20 kg/cm$^2$.
(2) The primary particles were assembled into secondary particles using a spheronizer.
(3) The mixture obtained by the mixing is thermally treated by firing, thereby obtaining a negative electrode active material according to an embodiment.

Steps (2) and (3) may be the same or substantially the same as Steps (2) and (3) in the preparation method according to the embodiment as described above, and further detailed descriptions thereof are omitted.

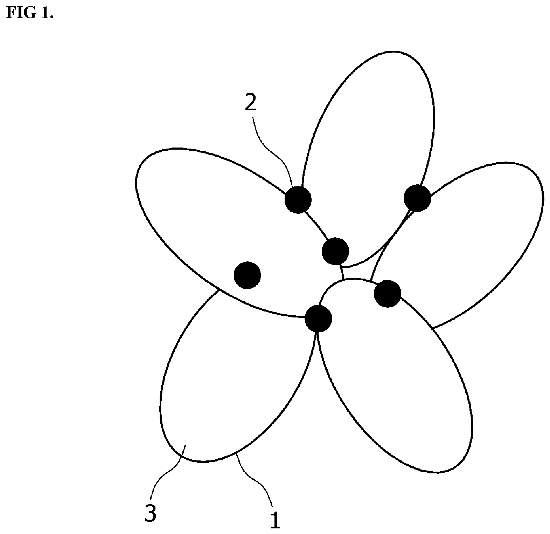

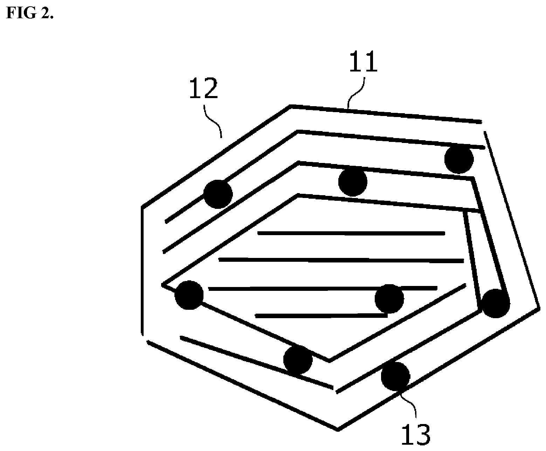

FIGS. 1 and 2 show conceptual diagrams of a negative electrode active material for a rechargeable lithium battery according to an embodiment.

Referring to FIG. 1, a negative electrode active material for a rechargeable lithium battery includes graphite including secondary particles 1 in which a plurality of primary particles 3 are assembled; and amorphous carbon 2 present inside the secondary particles. In an embodiment, although not shown in FIG. 1, a ratio of the average particle diameter (D50) of the amorphous carbon to the average particle diameter (D50) of the primary particles is 0.1 to 0.5.

Referring to FIG. 2, a negative electrode active material for a rechargeable lithium battery includes graphite including secondary particles 12 in which a plurality of primary particles 11 are assembled; and amorphous carbon 13 present inside the secondary particles 12. In an embodiment, although not shown in FIG. 2, a ratio of the average size (D50) of the amorphous carbon 13 to the average size (D50) of the primary particles 11 is 0.1 to 0.5.

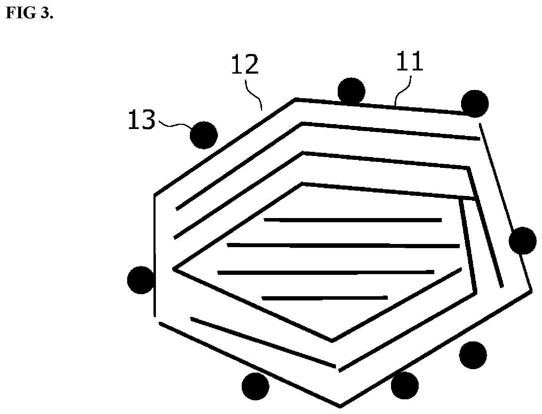

FIG. 3 shows a conceptual diagram of a negative electrode active material including graphite including secondary particles 12 in which a plurality of primary particles 11 are assembled; and amorphous carbon 13 present on an outer surface of the secondary particles 12 according to a comparative example.

A negative electrode plate for a rechargeable lithium battery according to another embodiment includes the negative electrode active material for a rechargeable lithium battery according to the embodiment.

In an embodiment, the negative electrode plate may include the above-described negative electrode active material for a rechargeable lithium battery in an amount of 95 wt% or more, for example, 95 to 100 wt% or 100 wt% in a negative electrode active material.

The negative electrode plate may further include one or more of a binder and a conductive material. The binder and conductive material may be as described below.

According to another embodiment, a battery for a lithium secondary battery comprises a negative electrode active material for a lithium secondary battery. In an embodiment, the battery for a lithium secondary battery may comprise a negative electrode comprising the negative electrode active material for a lithium secondary battery; and a positive electrode.

**Negative electrode**

The negative electrode for a rechargeable lithium battery may include a current collector and a negative electrode active material layer on the current collector. The negative electrode active material layer may include a negative electrode active material, and may further include a binder and/or a conductive material (e.g., an electrically conductive material).

In an embodiment, for example, the negative electrode active material layer may include about 90 wt% to about 99 wt% of the negative electrode active material, about 0.5 wt% to about 5 wt% of the binder, and about 0 wt% to about 5 wt% of the conductive material.

The negative active material includes the negative active material according to the above-described embodiment. In an example, the negative active material according to the above-described embodiment may be included in an amount of 95 wt% or more, for example, 95 to 100 wt%, such as 100 wt%, of the entire negative active material in the negative active material layer.

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be graphite, such as non-shaped, sheet-shaped, flake-shaped, sphere-shaped, or fiber-shaped, natural graphite or artificial graphite. The amorphous carbon may be any of a soft carbon, a hard carbon, a mesophase pitch carbonization product, calcined coke, and the like.

In an embodiment, the lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, $SiO_x$ ($0 < x \leq 2$), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, $SnO_2$, a Sn-based alloy, or a combination thereof.

The silicon-carbon composite may be a composite of silicon and amorphous carbon. According to an embodiment, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

The binder may attach the negative electrode active material particles well to each other and also attach the negative electrode active material well to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

If an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. In an embodiment, the alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may impart conductivity (e.g., electrical conductivity) to the electrode. Any suitable material that does not cause chemical change(e.g., does not cause an undesirable chemical change in the rechargeable lithium battery) and that conducts electrons can be used in the battery. Non-limiting examples thereof may include a carbon-based material, such as natural graphite, artificial graphite, carbon black, acetylene black, Ketjen black, a carbon fiber, a carbon nanofiber, and a carbon nanotube; a metal-based material including copper, nickel, aluminum, silver, etc. in a form of a metal powder or a metal fiber; a conductive polymer, such as a polyphenylene derivative; or a mixture thereof.

The negative current collector may include a copper foil, a nickel foil, a stainless steel foil, a titanium foil, a nickel foam, a copper foam, a polymer substrate coated with a conductive metal, or a combination thereof.

Positive electrode active material

The positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any of the following chemical formulas may be used. $Li_aA_{1-b}X_bO_{2-c}D_c$ ($0.90 \leq a \leq 1.8$, $0 \leq b \leq 0.5$, and $0 \leq c \leq 0.05$); $Li_aMn_{2-b}X_bO_{4-c}D_c$ ($0.90 \leq a \leq 1.8$, $0 \leq b \leq 0.5$, and $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ ($0.90 \leq a \leq 1.8$ and $0.001 \leq b \leq 0.1$); $Li_aCoG_bO_2$ ($0.90 \leq a \leq 1.8$ and $0.001 \leq b \leq 0.1$); $Li_aMn_{1-b}G_bO_2$ ($0.90 \leq a \leq 1.8$ and $0.001 \leq b \leq 0.1$); $Li_aMn_2G_bO_4$

(0.90≤a≤1.8 and 0.001≤b≤0.1); $Li_aMn_{1-g}G_gPO_4$ (0.90≤a≤1.8 and 0≤g≤0.5); $Li_{(3-f)}Fe_2(PO_4)_3$ (0≤f≤2); or $Li_aFePO_4$ (0.90≤a≤1.8).

In the above chemical formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and $L^1$ is Mn, Al, or a combination thereof.

The positive electrode active material may be, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

In an embodiment, an amount of the positive electrode active material may be about 90 wt% to about 99.5 wt% based on 100 wt% of the positive electrode active material layer. In an embodiment, amounts of the binder and the conductive material may be about 0.5 wt% to about 5 wt%, respectively, based on 100 wt% of the positive electrode active material layer.

The binder attaches the positive electrode active material particles well to each other and also attaches the positive electrode active material well to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may impart conductivity (e.g., electrical conductivity) to the electrode. Any suitable material that does not cause chemical change (e.g., does not cause an undesirable chemical change in the rechargeable lithium battery) and conducts electrons can be used in the battery. Examples of the conductive material may include a carbon-based material, such as natural graphite, artificial graphite, carbon black, acetylene black, Ketjen black, a carbon fiber, a carbon nanofiber, and carbon nanotube; a metal-based material containing copper, nickel, aluminum, silver, etc., in a form of a metal powder or a metal fiber; a conductive polymer, such as a polyphenylene derivative; or a mixture thereof.

In an embodiment, Al may be used as the current collector, but is not limited thereto.

The rechargeable lithium battery may further include an electrolyte solution.

## Electrolyte Solution

The electrolyte solution for a rechargeable lithium battery may include a non-aqueous organic solvent and a lithium salt.

The non-aqueous organic solvent may function as a medium for transmitting ions taking part in the electrochemical reaction of a battery.

The non-aqueous organic solvent may be a carbonate-based, ester-based, ether-based, ketone-based, or alcohol-based solvent, an aprotic solvent, or a combination thereof.

The carbonate-based solvent may include any of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include any of methyl acetate, ethyl acetate, n-propyl acetate, dimethyl acetate, methyl propionate, ethyl propionate, decanolide, mevalonolactone, valerolactone, caprolactone, and the like.

The ether-based solvent may include any of dibutyl ether, tetraglyme, diglyme, dimethoxyethane, 2-methyltetrahydrofuran, 2,5-dimethyltetrahydrofuran, tetrahydrofuran, and the like. The ketone-based solvent may include cyclohexanone, and the like. The alcohol-based solvent may include ethanol, isopropyl alcohol, and the like, and the aprotic solvent may include nitriles such as R-CN (wherein R is a C2 to C20 linear, branched, or cyclic hydrocarbon group, a double bond, an aromatic ring, or an ether bond, and the like; amides such as dimethylformamide; dioxolanes such as 1,3-dioxolane, 1,4-dioxolane, and the like; sulfolanes, and the like.

The non-aqueous organic solvents may be used alone or in combination of two or more.

In an embodiment, if using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$, where x and y are integers of 1 to 20, lithium trifluoromethane sulfonate, lithium tetrafluoroethanesulfonate, lithium difluorobis(oxalato)phosphate (LiDFOB), and lithium bis(oxalato) borate (LiBOB).

The rechargeable lithium battery may further include a separator.

**Separator**

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any selected from a polymer polyolefin, such as polyethylene and polypropylene, polyester, such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or a copolymer or mixture of two or more thereof.

The organic material may include a polyvinylidene fluoride-based polymer or a (meth)acrylic polymer.

The inorganic material may include inorganic particles selected from $Al_2O_3$, $SiO_2$, $TiO_2$, $SnO_2$, $CeO_2$, $MgO$, $NiO$, $CaO$, $GaO$, $ZnO$, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or a coating layer including an organic material and a coating layer including an inorganic material may be stacked.

**Rechargeable lithium battery**

The rechargeable lithium battery may be classified into any of cylindrical, prismatic, pouch, or coin-type batteries, and the like depending on a shape thereof.

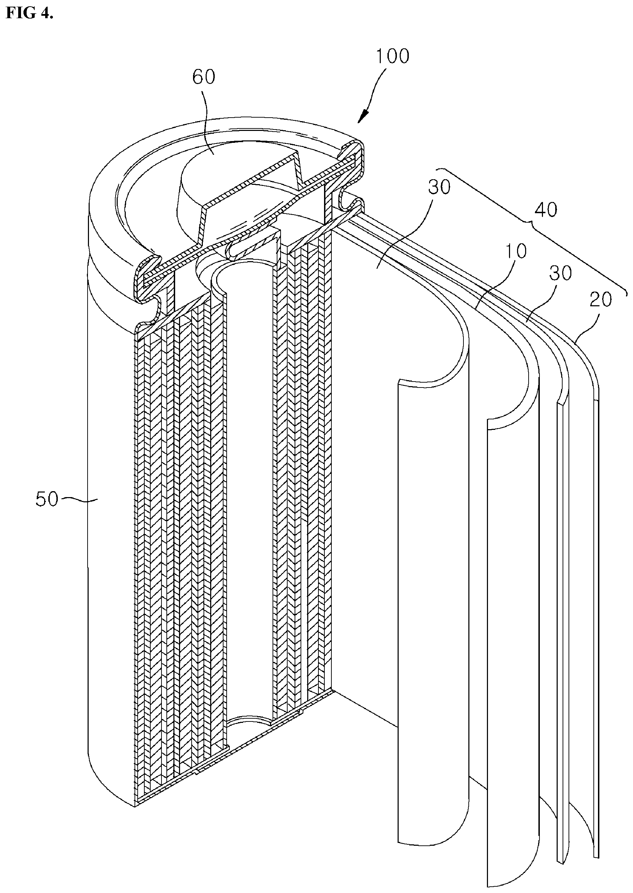

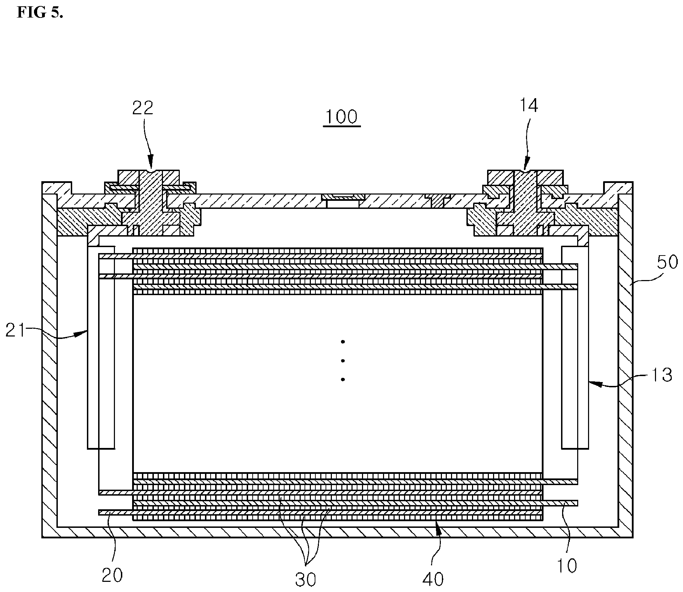

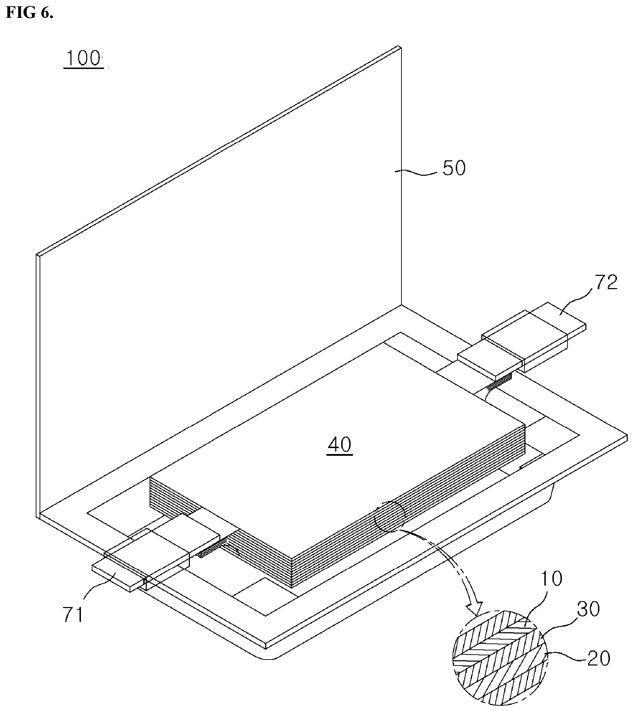

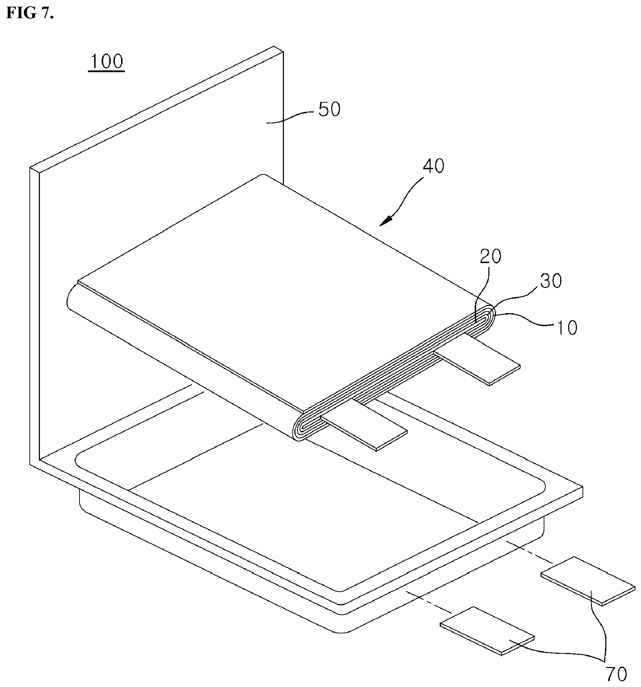

FIGS. 4 to 7 are schematic views illustrating a rechargeable lithium battery according to some embodiments. FIG. 4 shows a cylindrical battery, FIG. 5 shows a prismatic battery, and FIGS. 6 and 7 show pouch-type batteries. Referring to FIGS. 4 to 7, the rechargeable lithium battery 100 may include an electrode assembly 40 including a separator 30 between a positive electrode 10 and a negative electrode 20, and a case 50 in which the electrode assembly 40 is accommodated. The positive electrode 10, the negative electrode 20, and the separator 30 may be impregnated with an electrolyte solution (not shown). The rechargeable lithium battery 100 may include a sealing member 60 sealing the case 50, as shown in FIG. 4. In FIG. 5, the rechargeable lithium battery 100 may include a positive lead tab 13, a positive terminal 14, a negative lead tab 21, and a negative terminal 22. As shown in FIGS. 6 and 7, the rechargeable lithium battery 100 may include an electrode tab 70, which may be, for example, a positive electrode tab 71 and a negative electrode tab 72 to function as an electrical path for inducing the current formed in the electrode assembly 40 to the outside.

The rechargeable lithium battery according to one or more embodiments may be applied to automobiles, mobile phones, and/or various types of electric devices, as non-limiting examples.

Herein, some examples and comparative examples of the present invention will be described. However, the following examples are described for the purpose of illustration and are not intended to limit the scope of the present invention.

**Example 1**

Coke, which is an artificial graphite raw material, was pulverized by an airflow pulverization method to obtain plate-shaped primary particles having an average particle diameter D50 of 7 μm. The primary particles were assembled to form secondary particles having an average particle diameter D50 of 15 μm using a spheronizer. During the assembly process into secondary particles, amorphous hard carbon (mesophase pitch carbide) was added and simultaneously assembled, and then the resulting mixture was thermally treated in a firing furnace at 3000 °C for 2 hours to prepare a negative electrode active material. In this case, the amorphous hard carbon was added in an amount such that a weight ratio of artificial graphite:amorphous carbon in the negative electrode active material was 97:3.

97.5 wt% of the prepared negative electrode active material, 1.5 wt% of styrene butadiene rubber as a binder, and 1.0 wt% of carboxymethyl cellulose as an additive were mixed with distilled water to prepare a negative electrode active material slurry.

The negative electrode active material slurry was applied onto a copper current collector, dried, and then rolled to manufacture a negative electrode.

A half-cell was manufactured using the negative electrode, a lithium metal counter electrode, and an electrolyte.

The electrolyte was prepared by dissolving 1M LiPF$_4$ in a mixed solvent (volumetric mixing ratio of 3:7) of ethylene carbonate and dimethyl carbonate.

**Example 2**

The primary particle size and the weight ratio of artificial graphite and amorphous carbon of Example 1 were changed to prepare a negative electrode active material in which hard carbon was present inside secondary particles, a ratio shown in Table 1 was 0.5, and a hard carbon content in the negative electrode active material was 5 wt%.

An electrode plate and a half-cell were manufactured in the same manner as in Example 1 using the prepared negative electrode active material.

**Example 3**

A flaky natural graphite raw material having an average size D50 of 120 μm was pulverized by an airflow pulverization method to obtain plate-shaped primary particles having a major axis length of 20 to 30 μm. The primary particles were assembled to form spherical secondary particles having an average size D50 of 7 μm using a spheronizer. During the assembly process into secondary particles, amorphous hard carbon (mesophase pitch carbide) was added and simultaneously assembled, and then the resulting mixture was thermally treated in a firing furnace at 3000 °C for 2 hours to prepare a negative electrode active material. In this case, the amorphous hard carbon was added in an amount such that a weight ratio of natural graphite:amorphous hard carbon in the negative electrode active material was 99:1.

A negative electrode active material in which amorphous hard carbon was present inside secondary particles, a ratio shown in Table 1 was 0.1, and a hard carbon content in the negative electrode active material was 1 wt% was prepared. An electrode plate and a half-cell were manufactured in the same manner as in Example 1 using the prepared negative electrode active material.

**Example 4**

The primary particle size and the weight ratio of natural graphite and amorphous carbon of Example 3 were changed to prepare a negative electrode active material in which amorphous hard carbon was present inside secondary particles, a ratio shown in Table 1 was 0.5, and a hard carbon content in the negative electrode active material was 5 wt%. An electrode plate and a half-cell were manufactured in the same manner as in Example 1 using the prepared negative electrode active material.

**Comparative Example 1**

The method of Example 1 was changed to a method in which amorphous hard carbon was not added during the assembly process but mixed after the assembly of artificial graphite and thermally treated to prepare a negative electrode active material in which hard carbon was present on the outer surface of secondary particles and a hard carbon content in the negative electrode active material was 3 wt%.

An electrode plate and a half-cell were manufactured in the same manner as in Example 1 using the prepared negative electrode active material.

**Comparative Example 2**

The method of Example 2 was changed to a method in which amorphous hard carbon was not added during the assembly process but mixed after the assembly of artificial graphite and thermally treated to prepare a negative electrode active material in which hard carbon was present on the outer surface of secondary particles and a hard carbon content in the negative electrode active material was 5 wt%.

An electrode plate and a half-cell were manufactured in the same manner as in Example 1 using the prepared negative electrode active material.

**Comparative Example 3**

The primary particle size of Example 1 was changed and hard carbon having a ratio of 0.05 as shown in Table 1 was used to prepare a negative electrode active material in which hard carbon was present on the inner surface of secondary particles, a hard carbon content in the negative electrode active material was 3 wt%, and a ratio of the average particle diameter D50 of primary particles of artificial graphite to the average particle diameter D50 of secondary particles was 0.05.

An electrode plate and a half-cell were manufactured in the same manner as in Example 1 using the prepared negative electrode active material.

**Comparative Example 4**

The primary particle size of Example 1 was changed and hard carbon having a ratio of 0.6 as shown in Table 1 was used to prepare a negative electrode active material in which hard carbon was present on the inner surface of secondary particles, a hard carbon content in the negative electrode active material was 3 wt%, and a ratio of the average particle diameter D50 of primary particles of artificial graphite to the average particle diameter D50 of secondary particles was 0.6.

An electrode plate and a half-cell were manufactured in the same manner as in Example 1 using the prepared negative electrode active material.

**Comparative Example 5**

The method of Example 3 was changed to a method in which amorphous hard carbon was not added during the assembly process but mixed after the assembly of natural graphite and thermally treated to prepare a negative electrode active material in which hard carbon was present on the outer surface of secondary particles and a hard carbon content in the negative electrode active material was 1 wt%. An electrode plate and a half-cell were manufactured in the same manner as in Example 3 using the prepared negative electrode active material.

**Comparative Example 6**

The method of Example 3 was changed to a method in which amorphous hard carbon was not added during the assembly process but mixed after the assembly of natural graphite and thermally treated to prepare a negative electrode active material in which hard carbon was present on the outer surface of secondary particles and a hard carbon content in the negative electrode active material was 5 wt%. An electrode plate and a half-cell were manufactured in the same manner as in Example 3 using the prepared negative electrode active material.

**Comparative Example 7**

The primary particle size of Example 3 was changed and hard carbon having a ratio of 0.05 as shown in Table 1 was used to prepare a negative electrode active material in which hard carbon was present on the inner surface of secondary particles, a hard carbon content in the negative electrode active material was 1 wt%, and a ratio of the average size D50 of primary particles of natural graphite to the average size D50 of secondary particles was 0.05. An electrode plate and a half-cell were manufactured in the same manner as in Example 1 using the prepared negative electrode active material.

**Comparative Example 8**

The primary particle size of Example 3 was changed and hard carbon having a ratio of 0.6 as shown in Table 1 was used to prepare a negative electrode active material in which hard carbon was present on the inner surface of secondary particles, a hard carbon content in the negative electrode active material was 1 wt%, and a ratio of the average size D50 of primary particles of natural graphite to the average size D50 of secondary particles was 0.6. An electrode plate and a half-cell were manufactured in the same manner as in Example 1 using the prepared negative electrode active material.

**Experimental Examples**

Capacity (units: mAh/g), efficiency (units: %), and charge rate characteristics (units: %)

The half-cells manufactured in the examples and the comparative examples were charged and discharged once at 0.1 C and once at 0.2 C, and 0.2 C charge capacity was measured. Afterward, the half-cells were charged at 2.0 C and a 0.01 V cut-off, charged at a constant voltage and a 0.01 C cut-off, and then discharged at a constant current of 0.2 C and a 1.5 V cut-off, and 2 C charge capacity was measured. A value of 2 C charge capacity/0.2 C charge capacity was calculated to evaluate rate characteristics.

**Lifetime retention rate (units: %)**

The rechargeable lithium batteries manufactured in the Examples and the comparative examples were charged and discharged 50 times at 1C, and a lifetime retention rate, which is a ratio of discharge capacity after 50 charge-discharge cycles to initial discharge capacity, was calculated.

**Expansion rate (units: %)**

The half-cells manufactured in the Examples and the Comparative Examples were charged and discharged 50 times at 1 C. The thickness (initial thickness) of the cell before the charge-discharge cycles were performed and the thickness (thickness after charge and discharge) of the cell after 50 charge-discharge cycles were measured. From the measurement results, an expansion rate was calculated according to the following Equation 1. Results are shown in Table 1 below.

Expansion rate (%) = {(Thickness after charge and discharge-Initial thickness) / Initial thickness} * 100          <Equation 1>

Bonding strength of electrode plate (units: gf/mm)

Each negative electrode plate manufactured in the Examples and the Comparative Examples was first cut to prepare a negative electrode having a width of 25 mm and a length of 100 mm. A double-sided adhesive tape having a width of 20 mm and a length of 40 mm was attached to an acrylic plate having a width of 40 mm and a length of 100 mm. The prepared electrode was attached onto the double-sided adhesive tape and then gently pressed 5 times using a hand roller. The resulting product was mounted on a universal testing machine (UTM; 20 kgf load cell), about 25 mm of one side of the negative electrode was detached, the negative electrode and the tape attached to one surface of the negative electrode were fixed to the upper clip and lower clip of a tensile tester, respectively, and 180° detachment strength was measured while detaching the electrode at 100 mm/min.

Slurry viscosity (units: cps)

The viscosities of the negative electrode active material slurries of the Examples and the Comparative Examples were measured using a viscometer (Brookfield DV II+). 100 ml of the active material slurry was prepared in a beaker, and the slurry was allowed to come in contact with the measurement site of a spindle using a control panel. The spindle was located at the center of the sample while paying attention so as not to generate air bubbles due to the spindle. The viscosity is a value measured at room temperature (20 to 30 °C, 25 °C).

[Table 1]

|  | Examples | | | | Comparative Examples | | | | | | | |
|---|---|---|---|---|---|---|---|---|---|---|---|---|
|  | 1 | 2 | 3 | 4 | 1 | 2 | 3 | 4 | 5 | 6 | 7 | 8 |
| Type of graphite | Artificial graphite | Artificial graphite | Natural graphite | Natural graphite | Artificial graphite | Artificial graphite | Artificial graphite | Artificial graphite | Natural graphite | Natural graphite | Natural graphite | Natural graphite |
| Location /content of hard carbon | Inside/ 3 wt% | Inside/ 5 wt% | Inside/ 1 wt% | Inside/ 5 wt% | Surface/ 3 wt% | Surface/ 5 wt% | Inside/ 3 wt% | Inside/ 3 wt% | Surface/ 1 wt% | Surface/ 5 wt% | Inside/ 1 wt% | Inside/ 1 wt% |
| Ratio* | 0.1 | 0.5 | 0.1 | 0.5 | 0.5 | 0.5 | 0.0 5 | 0.6 | 0.5 | 0.5 | 0.0 5 | 0.6 |
| Capacity | 344 | 342 | 354 | 352 | 340 | 335 | 340 | 337 | 350 | 355 | 350 | 345 |
| Efficiency | 91. 3 | 90. 5 | 93. 3 | 92. 5 | 89 | 87 | 89 | 88 | 91.0 | 89.0 | 92. 1 | 91. 2 |
| Charge rate | 52 | 60 | 42 | 50 | 51 | 58 | 55 | 57 | 41 | 48 | 40 | 42 |
| Lifetime retention rate | 91. 9 | 91. 7 | 89. 9 | 89. 7 | 88.5 | 82.7 | 87. 7 | 85. 3 | 86.5 | 80.7 | 85. 7 | 83. 2 |

(continued)

| | Examples | | | | Comparative Examples | | | | | | | |
|---|---|---|---|---|---|---|---|---|---|---|---|---|
| | 1 | 2 | 3 | 4 | 1 | 2 | 3 | 4 | 5 | 6 | 7 | 8 |
| Type of graphite | Artificial graphite | Artificial graphite | Natural graphite | Natural graphite | Artificial graphite | Artificial graphite | Artificial graphite | Artificial graphite | Natural graphite | Natural graphite | Natural graphite | Natural graphite |
| Expansion rate | 5.3 | 5.4 | 8.3 | 8.4 | 7.2 | 8.6 | 5.5 | 7.5 | 10.2 | 11.6 | 8.7 | 10.5 |
| Electrode plate bonding strength | 1.08 | 1.10 | 1.58 | 1.6 | 0.85 | 0.71 | 0.91 | 0.82 | 1.35 | 1.21 | 1.43 | 1.35 |
| Viscosity | 1450 | 1400 | 1450 | 1400 | 3000 | 4000 | 2500 | 3200 | 3000 | 4000 | 2500 | 3200 |
| *Ratio of average particle diameter D50 of amorphous carbon to average particle diameter D50 of primary particles | | | | | | | | | | | | |

As shown in Table 1, the negative electrode active materials for a rechargeable lithium battery according to the Examples increased the capacity, charge rate, and lifetime retention rate of the cell and decreased an expansion rate, and, thus, a boost charging effect could be provided. Also, the negative electrode active materials according to the Examples provided high bonding strength of the electrode plate and had appropriate viscosity, and, thus, an electrode plate could be easily manufactured.

However, the negative electrode active materials according to the Comparative Examples were relatively poor in terms of capacity, a charge rate, a lifetime retention rate, an expansion rate, and bonding strength of an electrode plate compared to the negative electrode active materials according to the Examples, and the viscosity was increased, and thus processability in manufacturing an electrode plate was poor.

The negative electrode active material for a rechargeable lithium battery according to one or more embodiments provides a boost charging effect, high bonding strength of an electrode plate, and an effect of suppressing side reactions caused by hard carbon, and a rechargeable lithium battery with excellent performance can be implemented.

The negative electrode active material for a rechargeable lithium battery according to one or more embodiments can improve processability in manufacturing a negative electrode by providing a slurry having appropriate viscosity.

While some example embodiments of the present invention have been described herein, the present invention is not limited thereto. For example, various modifications may be carried out within the scope of the claims, the detailed description of the present invention, and the appended drawings, and are included in the scope of the present invention.

**Claims**

1. A negative electrode active material for a rechargeable lithium battery, the negative electrode active material comprising:

   graphite including secondary particles in which primary particles are assembled; and
   amorphous carbon present inside the secondary particles,
   wherein a ratio of an average particle diameter (D50) of the amorphous carbon to an average particle diameter (D50) of the primary particles is 0.1 to 0.5.

2. The negative electrode active material as claimed in claim 1, wherein the amorphous carbon is present on a surface of the primary particles.

3. The negative electrode active material as claimed in claim 1 or 2, wherein the amorphous carbon is present on a surface of the primary particles and in a space made by assembling the primary particles.

4. The negative electrode active material as claimed in any of claims 1-3, wherein the amorphous carbon is present in a form of independent particles separated from each other.

5. The negative electrode active material as claimed in any of claims 1-4, wherein the average particle diameter (D50) of the primary particles is 7 $\mu$m to 10 $\mu$m.

6. The negative electrode active material as claimed in any of claims 1-5, wherein the secondary particles have an average particle diameter (D50) of 8 $\mu$m to 30 $\mu$m.

7. The negative electrode active material as claimed in any of claims 1-6, wherein a ratio of an average particle diameter (D50) of the secondary particles to the average particle diameter (D50) of the primary particles is more than 1 and 3 or less.

8. The negative electrode active material as claimed in any of claims 1-7, wherein the primary particles have a plate shape, optionally wherein the primary particles have a major axis length of 5 to 200 $\mu$m.

9. The negative electrode active material as claimed in claim 8, wherein the secondary particles have an average size of 5 to 30 $\mu$m.

10. The negative electrode active material as claimed in any of claims 1-9, wherein the amorphous carbon has an average particle diameter (D50) of 1 $\mu$m to 5 $\mu$m.

11. The negative electrode active material as claimed in any of claims 1-10, wherein the amorphous carbon is included in an amount of 1 to 10 wt% in the negative electrode active material.

12. The negative electrode active material as claimed in any of claims 1-11, wherein the graphite is one or more of artificial graphite and natural graphite.

13. The negative electrode active material as claimed in any of claims 1-12, wherein the amorphous carbon is hard carbon.

14. A negative electrode plate comprising the negative electrode active material for a rechargeable lithium battery as claimed in any of claims 1-13.

15. A rechargeable lithium battery comprising:

a negative electrode including the negative electrode active material for a rechargeable lithium battery as claimed in any of claims 1-13; and
a positive electrode.

**FIG 1.**

FIG 2.

**FIG 3.**

FIG 4.

**FIG 5.**

FIG 6.

FIG 7.

**EP 4 708 380 A1**

# EUROPEAN SEARCH REPORT

Application Number

EP 25 19 8385

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2023 0093824 A (POSCO HOLDINGS INC [KR]; RES INST IND SCIENCE & TECH [KR]) 27 June 2023 (2023-06-27) * paragraphs [0036], [0040], [0041], [0078] * * table 1 * * claims 1,2,4,5 * | 1-15 | INV. H01M4/133 H01M4/36 H01M4/587 H01M10/0525 H01M4/02 |
| X | KR 2020 0064052 A (POSCO [KR]; RES INST IND SCIENCE & TECH [KR]) 5 June 2020 (2020-06-05) * paragraphs [0019] - [0023], [0059] - [0068], [0096] - [0111] * * table 1 * * figure 1 * | 1-15 | |
| A | CN 115 832 291 A (TIANJIN EV ENERGIES CO LTD) 21 March 2023 (2023-03-21) * claims 1,2,6 * * figure 1 * | 1-15 | |

TECHNICAL FIELDS SEARCHED (IPC)

H01M

The present search report has been drawn up for all claims

| Place of search | Date of completion of the search | Examiner |
|---|---|---|
| Munich | 13 January 2026 | Galbiati, Ivano |

EPO FORM 1503 03.82 (P04C01)

**EP 4 708 380 A1**

## ANNEX TO THE EUROPEAN SEARCH REPORT
## ON EUROPEAN PATENT APPLICATION NO.

EP 25 19 8385

13-01-2026

| Patent document cited in search report | Publication date | Patent family member(s) | Publication date |
|---|---|---|---|
| KR 20230093824 A | 27-06-2023 | NONE | |
| KR 20200064052 A | 05-06-2020 | NONE | |
| CN 115832291 A | 21-03-2023 | NONE | |

EPO FORM P0459